(19) **Europäisches Patentamt**
**European Patent Office**
**Office européen des brevets**

(11) **EP 2 420 202 A2**

(12) **EUROPEAN PATENT APPLICATION**

(43) Date of publication:
**22.02.2012 Bulletin 2012/08**

(51) Int Cl.:
*A61C 17/34* (2006.01)    *H02P 25/00* (2006.01)

(21) Application number: **11006064.7**

(22) Date of filing: **25.07.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **19.08.2010 EP 10008644**

(71) Applicant: **Braun GmbH**
**61476 Kronberg/Taunus (DE)**

(72) Inventors:
• **Klemm, Torsten**
**65760 Eschborn (DE)**
• **Heil, Benedikt**
**61169 Friedberg (DE)**
• **Lückel, Kris**
**61476 Kronberg/Taunus (DE)**

(54) **Resonant motor unit and electric device with resonant motor unit**

(57)     The present disclosure proposes a resonant motor that has a control unit for driving the resonant motor at a driving frequency; a measurement unit for measuring at a predetermined first time instant a first motor signal that is indicative of whether the effective resonance frequency of the resonant motor is above or below a predetermined first resonance frequency value; and an evaluation unit for evaluating the measured first motor signal and for determining whether the effective resonance frequency has changed from being above to below or from being below to above the predetermined first resonance frequency value. An electric device comprising such a resonant motor is also described.

Fig. 2

**Description**

FIELD OF THE INVENTION

The present invention is generally related to resonant motor units and an electric devices comprising a resonant motor unit, as well as methods of controlling a resonant motor.

BACKGROUND OF THE INVENTION

A resonant motor may be controlled based on the load of the resonance motor. In order to accomplish such a control, the motor current or to the peak amplitude of the moving motor armature of the resonant motor may be measured. This allows for the resonant motor to be controlled such that a constant peak amplitude is always achieved independent of the load of the motor. Such a control is relatively complex and requires further elements in the control loop such as a position detector measuring the peak amplitude. In a situation, where only a simple control is required, these solutions are relatively costly.

It is thus a desire to provide a resonant motor unit and a method of controlling a resonant motor in a relatively simple way.

SUMMARY OF THE INVENTION

In accordance with at least some embodiments, there is provided a resonant motor unit having a resonant motor; a control unit for driving the resonant motor at a driving frequency; a measurement unit for measuring at a predetermined first time instant a first motor signal that is indicative of whether the effective resonance frequency of the resonant motor is above or below a predetermined first resonance frequency value; and an evaluation unit for evaluating the measured first motor signal and for determining whether the effective resonance frequency has changed from being above to below or from being below to above the predetermined first resonance frequency value.

In accordance with at least some embodiments, there is provided a method of controlling a resonant motor having the acts of driving the resonant motor at a driving frequency; influencing the resonant motor such that the effective resonance frequency varies; repeatedly measuring at a predetermined first time instant within successive driving cycles a first motor signal that is indicative of whether the effective resonance frequency is above or below a predetermined first resonance frequency value; and evaluating the measured first motor signals to determine whether the effective resonance frequency has changed from being above to below or from being below to above the predetermined first resonance frequency value.

BRIEF DESCRIPTION OF THE DRAWINGS

The present disclosure is further elucidated by detailed description of general embodiments of resonant motors or control methods of resonant motors and by a detailed description of example embodiments, where reference is made to figures. In the figures

Fig. 1      is depiction of an electric device;
Fig. 2      is a depiction of a resonant motor unit having a resonant motor and a control circuitry;
Fig. 3      is a schematic depiction of a control scheme of a resonant motor depending on a load level applied at the resonant motor;
Fig. 4A    is a schematic depiction of three motion-induced voltage curves relating to different effective resonance frequencies and of respective curves of a current flow through the motor coil;
Fig. 4B    is schematic depiction of the current flow and the total voltage across the resonant motor for the two most extreme cases of Fig. 4A;
Fig. 5      is a schematic depiction of two examples of a current flow through a coil of a resonant motor where three predetermined measurement time instance are foreseen;
Fig. 6      is a schematic depiction of a current flow through the coil of a resonant motor where a predetermined measurement time instant is foreseen during a driving phase.

DETAILED DESCRIPTION OF THE INVENTION

In accordance with some embodiments, control of a resonant motor is enabled by measuring and evaluating at least a first motor signal that is indicative of whether an effective resonance frequency of the resonant motor is above (or below) a first predetermined resonance frequency value and thus allows for determining whether the effective resonance frequency has changed. For example, it may be determined whether the effective resonance frequency has changed from being above (or below) the first predetermined resonance frequency value to being below (or above) this value when the first motor signal is successively measured and its change is evaluated. This may allow for controlling the resonant motor depending on the changes of the effective resonance frequency.

For example, the control of the embodiments described herein may allow the driving of the resonant motor differently below and above the predetermined first resonance frequency value (e.g. with a low amplitude as long as the predetermined first resonance frequency value is not reached or with a higher amplitude when the predetermined first resonance frequency is reached). As described in more detail below, in the context of an exemplary oral hygiene device, such as an electric toothbrush, the resonant motor may be controlled with a relatively low operational amplitude to indicate to the user that the electronic toothbrush is in an on-state and is functional. When the brush head of the electric toothbrush is applied to a user's oral cavity, the effective resonance frequency of the resonant motor may change, and the resonant motor may be controlled to have a higher operational amplitude.

In some embodiments, the first motor signal provides essentially binary single-digit information, indicative of whether the effective resonance frequency is above or below the first predetermined resonance frequency value. The first predetermined resonance frequency value may correspond to a particular load D1 that is applied to the functional element of the resonant motor (i.e., a brush head applied to the surface of a user's tooth or teeth with a particular force). As described in detail below, the first motor signal may be based at least in part on the difference between a driving frequency $f_d$ used to drive the resonant motor and the effective resonant frequency $f_r$.

Additionally, at least a second motor signal may also be measured that is indicative of whether the effective resonance frequency of the resonant motor is above (or below) a second predetermined resonance frequency value. It may also be determined whether the effective resonance frequency has changed from being above (or below) the second predetermined resonance frequency value to being below (or above) this value when the second motor signal is successively measured and its change is evaluated. This may allow for controlling the resonant motor in dependence on at least two predetermined resonance frequency values. Using the oral hygiene example once again, the second predetermined resonance frequency may correspond to a second, greater load D2 that is applied to the surface a user's tooth or teeth, wherein the load D2 may be predetermined to be too great a force to be pressing on the surface of the tooth or teeth with the brush head. The control may then decrease the operational amplitude of the resonant motor when the second motor signal indicates that the effective resonant frequency is greater than the second predetermined resonance frequency.

As stated above with respect to the first motor signal, the second motor signal may be based at least in part on the difference between the driving frequency $f_d$ and the effective resonant frequency $f_r$. The first and second motor signals may be calibrated to coincide with the particular load values (e.g., load D1 and D2) and the corresponding effective frequencies $f_{r1}$ and $f_{r2}$, respectively. It is noted that the control may also provide for the measurement of additional motor signals to enable a motor controller that utilizes more than two predetermined resonance frequency values.

In some embodiments, a resonant motor unit has a resonant motor, a control unit, a measurement unit and an evaluation unit that are arranged so that the above described control method can be accomplished.

While various example embodiments are discussed in the following, it is stated that all features that are disclosed in the present description, whether as isolated features or as a feature within the context of other features, all features are intended to be individually combinable with each other to the extent that this is possible and is not in contradiction with the gist and scope of the present disclosure.

In the following, the resonance frequency of a resonant spring-mass system such as a resonant motor is denoted by $f_R$, the effective resonance frequency that develops when the resonant motor is loaded, i.e. when one of the relevant parameters defining the resonance frequency is changed, is denoted by $f_r$, a predetermined first resonance frequency value is denoted by $f_{r1}$ and a predetermined second resonance frequency value is denoted by $f_{r2}$.

A resonant spring-mass system, such as a resonant motor (which may also be called an oscillating motor or a vibrating motor), has a resonance frequency $f_R(m;k_s)$ that is dependent on the relevant mass m and the relevant spring constant $k_s$. The resonant spring-mass system can be excited by a periodic driving force F(t) having a driving frequency $f_d$, which results in a periodic (typically sinusoidal) movement of the driven mass.

In some embodiments, a resonant motor has a stator comprising a motor coil (which may be secured to a housing of a device in which the resonant motor is disposed) and a movably mounted motor armature comprising one or several permanent magnets. In an unpowered state, the movably mounted motor armature is held in a rest position by a return force element that in an embodiment is realized as a spring or a spring arrangement. When an alternating current is provided at the motor coil (i.e. energy is introduced into the resonant motor), the developing electromagnetic field of the motor coil drives the movably mounted motor armature into a periodic movement. At least some of the movement of the motor armature is against the return force provided by the return force element. As long as energy is continuously provided to replace the energy consumed by the resonant motor, the resonant motor may achieve and then stay in an equilibrium state in which the peak amplitude of the moving motor armature is kept constant as long as the load of the resonant motor is kept constant.

The frequency $f_m$ of the driven periodic movement is determined by the driving frequency $f_d$, i.e. $f_m = f_d$. The periodic driving force and the driven periodic movement have a defined phase shift that depends, inter alia, on the difference between the driving frequency $f_d$ and the effective resonance frequency $f_r$. When the resonant motor (or in general: a resonant spring-mass system) is driven at its effective resonance frequency, i.e. $f_d = f_r$, the driven periodic movement has a phase shift of $-\pi/2$, i.e. -90 degrees, to the periodic driving force.

A resonant motor may be utilized in an electric device (e.g., an electric oral hygiene device) to drive a functional element into motion, in particular an oscillating motion. In an embodiment in which the electric device is an oral hygiene device, such as an electric toothbrush, the functional element may be a brush head comprising a plurality of cleaning elements extending from a surface of the brush head. When the brush head is pressed against a surface, e.g. a tooth surface, then at least one of the effective mass of the resonant and the effective spring constant of the resonant motor is influenced. This pressure dependent influence of at least one of the effective mass or effective spring constant leads to a variation of the effective resonance frequency $f_r$ due to the dependence of the resonance frequency on these parameters (i.e. the effective resonance frequency of the electric device changes over time during operation in case the load on the resonant motor is changed). In an embodiment, the driving frequency $f_d$ is kept constant, while the effective resonance frequency $f_r$ is varied, e.g. due to pressure applied on the driven functional element. As a result, the peak amplitude of the driven periodic movement is varied and also the phase shift of the driven periodic movement to the periodic driving force is varied.

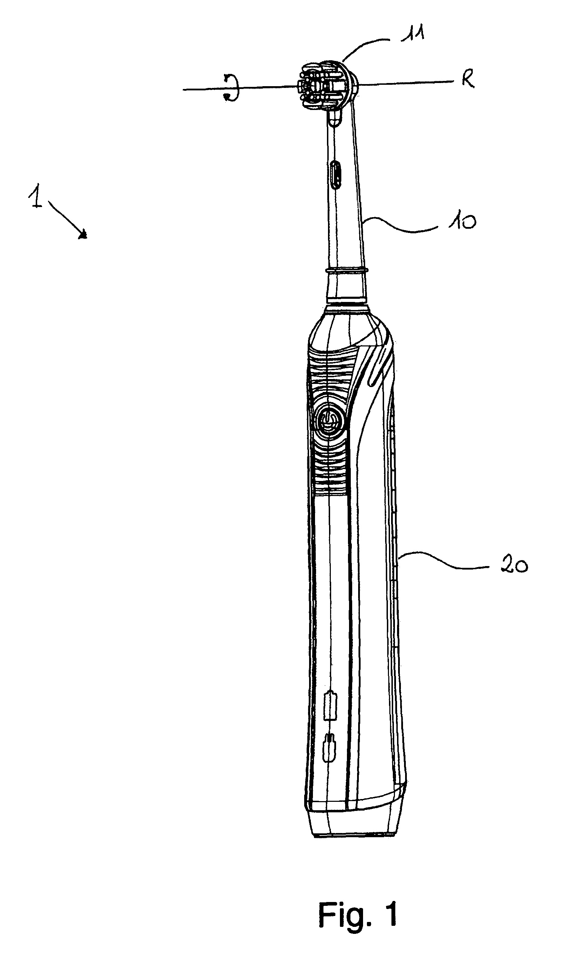

Fig. 1 is a depiction of an electric device realized as an oral hygiene device 1, here in the form of an electric toothbrush. The oral hygiene device 1 comprises a handle 20 and an attachment 10. The attachment 10 comprises a functional element 11 mounted for driven oscillatory motion around a rotation axis R as indicated by a double arrow 12. The functional element 11, here realized as a brush head comprising a plurality of cleaning elements that are here realized as bristle tufts, may be driven by a resonant motor such that the functional head 11 oscillates about the rotation axis R. During operation, the resonant motor is controlled by a control unit.

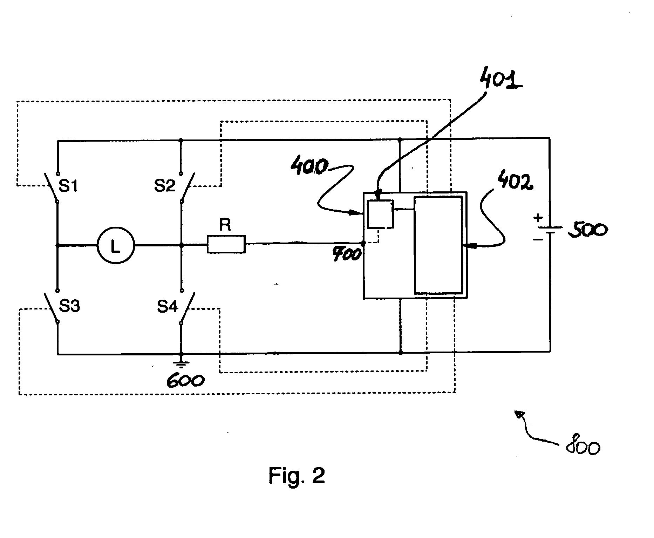

Fig. 2 shows an example embodiment of a resonant motor unit 800 comprising a resonant motor L and a control circuitry for controlling the resonant motor L. In the shown example embodiment, the resonant motor L is arranged in the bridge section of an H-bridge arrangement comprising four switches S 1, S2, S3, S4 (one switch being arranged in each of the legs of the H-bridge). Switches S1, S2, S3, S4 may be realized as MOSFETs in one embodiment, or other switching devices. Each of the switches S1, S2, S3, S4 may comprise a protective element such as a protective diode arranged parallel to the switch to protect the switch from over-voltages and to allow for commutation of current over the protective diode when the current through the inductor of the resonant motor L (i.e. the coil of the resonant motor L) is switched off.

As has been stated above, the resonant motor L can be driven into a periodic movement by applying a periodic drive force. This periodic drive force is generated by a control unit 400 switching the switches S1, S2, S3, S4 on and off such that in each driving cycle the voltage of a supply voltage source 500 is applied at the motor in a positive half cycle, e.g. the voltage is applied in a positive direction, and in the negative half cycle, e.g. the voltage is applied in a negative direction. If the resonant motor L is not continuously driven (i.e. supplied with energy), the damping typically inherently present in any real system would gradually reduce the motor amplitude until the moving motor armature would stop.

At constant driving frequency $f_d$ and constant resonance frequency $f_R$, the amplitude of the moving motor armature can be varied by increasing or decreasing the driving force (i.e. by increasing or decreasing the energy that is periodically put into the resonant motor). The increasing or decreasing of the driving force can be accomplished by increasing or decreasing the time length of the driving periods (i.e. the time length during which the supply voltage is applied at the resonant motor L). Further, the control unit 400 may control the switches S1, S2, S3, S4 to short-circuit the resonant motor L during a short-circuiting phase following the driving phase. For example, the control unit may close switches S1 and S2 or S3 and S4 during the short-circuiting phase. The control unit 400 may further control the switches S1, S2, S3, S4 such that at the end of the short-circuiting phase all switches are opened and the current flow through the resonant motor (i.e. through the motor coil) is switched off for a shutoff phase. Such phases of driving a resonant motor are generally described in DE 102 46 520 A1 together with potential further driving phases.

The voltage $U_M$ at the motor (measured against ground potential 600) may be provided at an input 700 of a measurement unit 401. The measurement unit 401 is in the shown embodiment realized as a part of the control unit 400. The measurement may be performed in temporal synchrony with the switching-off of the current flow through the resonant motor L. The measured first motor signal may then be evaluated by an evaluation unit 402 that in the shown embodiment is also realized as a part of the control unit 400.

Generally, either one or both of the measurement unit and the evaluation unit may be realized as being separate from the control unit. Alternatively, at least two units from the group consisting of the control unit, the measurement unit, and the evaluation unit may be realized as an integral unit, such as a microprocessor on which the functionalities of the combined units are realized.

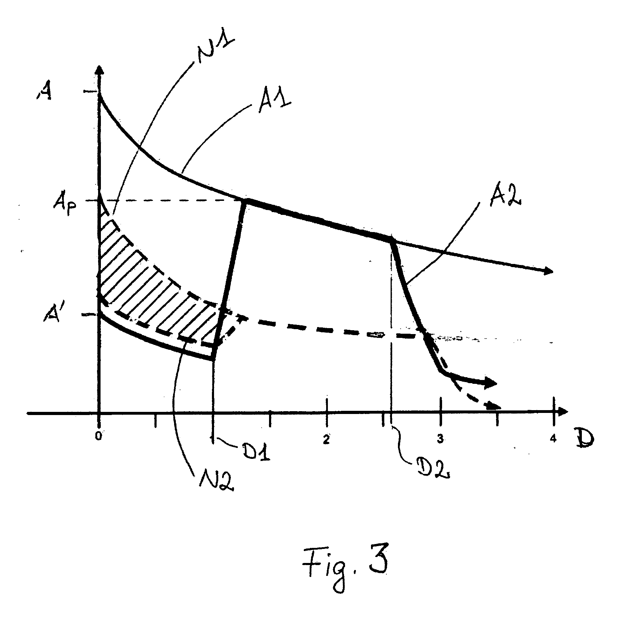

When the resonant motor L is in a constantly driven state, the moving motor armature oscillates with constant amplitude as long as the load on the motor does not change. When the supply voltage is applied at the resonant motor L during a driving phase, a current flow builds up through the motor. The current flow build up is dependent on the difference between the driving frequency $f_d$ and the effective resonance frequency $f_r$ (i.e. the current flow rise is dependent on the phase shift between periodic driving force and driven periodic movement). When the motor is then short-circuited during a short-circuiting phase, i.e. when the supply voltage is not applied across the motor coil anymore, then current flow is driven by the voltage induced in the motor coil via the moving motor armature. At the end of the short-circuiting phase, the remaining current flow may be switched-off by opening all switches of the H-bridge, in the shutoff phase. Fig. 3 is a schematic depiction of amplitude curves A1 (thin line) and A2 (thick line) and corresponding noise level curves N1 (thin dashed line) and N2 (thick dashed line) for an electric device that shall work at a certain peak amplitude $A_p$ of the driven functional element of the electric device when a first predetermined load value D1 is achieved. The predetermined load D 1 relates to the pressure applied on the functional element which influences the effective resonance frequency. Without loss of generalization, it is assumed that the pressure applied at the functional element and the change of the effective resonance frequency have a clear functional relation such that a given pressure value results in a certain effective resonance frequency value..

Thin line A1 indicates the behavior of the peak amplitude when load is applied on the motor without applying the discussed control method. As indicated by the thick line A2, the control unit of the resonant motor system may be arranged to drive the resonant motor at a predetermined driving frequency $f_d$ so that a low peak amplitude A' of the functional element is achieved when the electric device is switched on and/or under a load of less than D1. As depicted in Fig. 3, the start peak amplitude A of the functional element is higher than the start peak amplitude A' when the disclosed control method is employed.

Without loss of generality, the curves A1 and A2 here show a decrease in peak amplitude with increasing load D. With a resonant motor (or a control method for controlling a resonant motor) as proposed herein, the resonant motor may be driven at a desired peak amplitude $A_p$ when the first predetermined load value D1 is reached, and is driven at a low amplitude A' when the electric device is switched on without load.

A low starting amplitude may provide a user with a perceivable signal of the operational state of the electric device. The low amplitude A' may also prevent water or any substance (e.g. toothpaste) that may be applied onto the functional element of the electric device from being spattered about. Additionally, a relatively low noise level may be achieved as is indicated by the thick dashed line N2 in comparison to the thin dashed line N1 that indicates the noise level of the electric device without the herein proposed resonant motor unit and/or control methods, respectively.

As will be explained in more detail further below, the resonant motor unit may also be arranged to measure and evaluate a second motor signal that is indicative of whether the effective resonance frequency $f_r$ has changed from being above (or below) a second predetermined resonance frequency value $f_{r2}$ to being below (or above) the second predetermined resonance frequency value $f_{r2}$. This may allow for the control of the resonant motor with respect to a second predetermined load value D2. The resonant motor may in particular be arranged to drop to a low or even zero peak amplitude when the second predetermined load value D2 is reached or exceeded as is schematically indicated by thick line A2. For example, when the resonant motor drives a functional element being a brush head of an electric toothbrush, it can be signaled to a user that teeth and gums are brushed with too high pressure by decreasing amplitude and/or driving frequency.

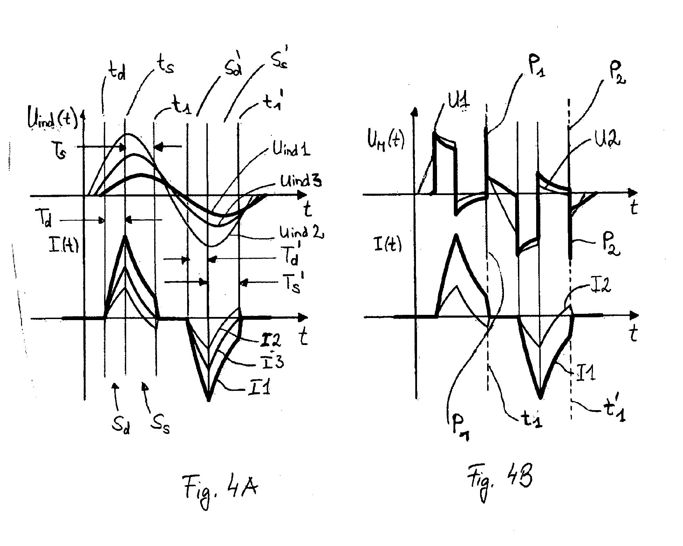

As described below, first and second motor signals that correspond to first and second predetermined resonance frequency values $f_{r1}$ and $f_{r2}$ may be based at least in part on movement-induced voltage $U_{ind}(t)$ and current flow I(t). In the following, reference is made to Figs. 4A and 4B. Figure 4A shows the movement-induced voltage Uind(t) and the current flow I(t) through the motor coil for three different (effective) resonance frequencies with respect to a fixed driving frequency for a single driving cycle during an equilibrium state of the resonant motor. The three example curves are indicated by Uind1, Uind2, and Uind3 for the movement-induced voltage and by I1, I2, and I3 for the current flowing through the motor coil. In these three exemplary curves, a time length $T_d$ of a driving phase $S_d$ and a time length $T_s$ of a short-circuiting phase $S_s$ following the driving phase $S_d$ and followed by a switching-off of the current flow at a fixed predetermined first time instant $t_1$ are fixed within the first (here: positive) half cycle.

The motion-induced voltage $U_{ind}(t)$ is phase shifted with respect to the position function (i.e. the driven periodic movement) of the driven moving motor armature by + 90 degrees. As at the centre position the velocity of the moving motor armature in the powered state is highest and thus the motion induced voltage is highest, the thick curve Uind1 shows a case where the (effective) resonance frequency is relatively far away from the driving frequency, and the thin line Uind2 shows a case where the resonance frequency is relatively close to the driving frequency. The medium line Uind3 indicates a case where the current flow is approximately zero at the predetermined first time instant $t_1$ at which the current flow is switched off.

Fig. 4B shows the voltage across the resonant motor $U_M(t)$ and again the current flow I(t) through the motor coil for the two extreme cases shown in Fig. 4A. The voltage across the motor $U_M(t)$ is indicated by U1 (thick line) and U2 (thin line), which curves correspond to the current flow indicated by lines I1 (thick line) and I2 (thin line), respectively.

The voltage $U_M$ across the resonant motor is given by a self-induced voltage $U_L$, a voltage developing at the ohmic resistance of the motor coil is $U_R = I \cdot R$, where I is the motor current and R is the resistance of the motor coil, and a voltage induced in the motor coil by the permanent magnets moving relative to the coil, $U_{ind} = L \cdot dI(t)/dt$, where L is the inductance of the coil and $dI(t)/dt$ is the temporal change of the motor current (i.e. the first derivative of the motor current $I(t)$ with respect to the time t), so that

$$U_M = U_L + U_{ind} + U_R = L \cdot dI(t)/dt + U_{ind} + I \cdot R$$

It has here been omitted to indicate that all voltages appearing in this equation are time dependent, i.e. $U_M \equiv U_M(t)$ etc.

Referring to Figs. 4A and 4B, the resonant motor is driven at a constant driving frequency $f_d$. According to an embodiment of the control scheme of the present invention, each driving cycle has a driving phase $S_d$ having a predetermined time length $T_d$ and is followed by a short-circuiting phase $S_s$ having a predetermined time length $T_s$. The driving phase $S_d$ and short-circuiting phase $S_s$ may be applied only in a first half-cycle (e.g. only in the positive or only in the negative half cycle). In the shown embodiment, the first half cycle is the positive half cycle. In the shown embodiment, a driving phase $S_d'$ and a short-circuiting phase $S_s'$ may also be applied during the second half cycle (here: the negative half cycle). In another embodiment, no driving phase and no short-circuiting phase are applied during the second half cycle. Here, at least one of the driving phase $S_d'$ and the short-circuiting phase $S_s'$ applied in the second half cycle may have a different time length than their respective counterpart phase in the first half-cycle. In an embodiment, two or more driving phases may be applied in the first and/or second half cycle and each may be followed by a respective short-circuiting phase.

During the driving phase $S_d$ (i.e., during the time period (or time periods) during which the source voltage is applied at the resonant motor), a current flow $I(t)$ builds up in the motor coil. As was stated already, the rise of the current flow is dependent on the phase shift between the periodic driving force and the driven periodic movement. The moving motor armature induces at a first phase shift value $\varphi 1$ a voltage $U_{ind}(t=t_0; \varphi_1)$ in the motor coil, but usually a different voltage $U_{ind}(t=t_0; \varphi_2)$ at a second phase shift value $\varphi_2$ at the same time instant $t=t_0$, i.e. generally $U_{ind}t=t_0; \varphi 2) \neq U_{ind}(t=t_0; \varphi_1)$.

These differences in the motion-induced voltage influence, inter alia, the current build-up during the driving phase $S_d$. The current build-up is also dependent on the driving phase start time $t_d$ at which the driving phase is initiated. In some embodiments, the driving phase start time $t_d$ may be chosen once and then kept fixed. Accordingly, when $t_d$ and $T_d$ are fixed, the current flow $I(t)$ through the motor coil during the driving phase $S_d$ depends on the phase shift (i.e., on the difference between the driving frequency $f_d$ and the effective resonance frequency $f_r$). From this difference, the presence of a certain load on the resonant motor that influences the effective resonance frequency can be determined and, therefore, the operational parameters of the resonant motor adjusted.

Generation of the first motor signal that is indicative of whether the effective resonance frequency $f_r$ is above (or below) a predetermined first resonance frequency value $f_{r1}$ will now be described below. A short-circuiting phase $S_s$ having a predetermined time length $T_s$ can follow after the driving phase $S_d$. The current flow through the motor coil is then driven by the movement induced voltage $U_{ind}$ and generally decreases during the short-circuiting phase $S_s$. At the end of the short-circuiting phase $S_s$, the current flow through the resonant motor may be switched off at a predetermined first time instant $t_1$. Due to the dependence of the current flow build-up and also of the current flow decrease on the phase shift (and hence on the effective resonance frequency which depends on the motor load), the height of the current $I(t_1)$ flowing through the coil of resonant motor at the predetermined first time instant $t_1$ may be positive or negative (or may be just exactly zero) as is shown in Figs. 4A and 4B. Thus, the current value $I(t_1)$ just prior to the predetermined first time instant $t_1$ depends on the difference between driving frequency $f_d$ and effective resonance frequency $f_r$, and thus determines the residual energy in the resonant motor related to $U_L$ at the switch-off instant $t_1$. Further, the residual energy in the resonant motor at switch-off related to $U_{ind}$ is also depending on the difference between driving frequency $f_d$ and resonance frequency $f_r$. As the change in current flow through the resonant motor $dI(t_1)/dt$ becomes relatively high even when only a small current flows at the switch-off instant $t_1$, the self induced voltage $U_L$ may typically dominate over the movement-induced voltage $U_{ind}$. At small residual current flow at the first predetermined time instant $t_1$, $U_{ind}$ may dominate over $U_L$.

At the switch-off instant $t_1$, the resonant motor responds with a high voltage peak $P_1$ allowing the residual current to commute over the protective diodes of the switches of the H-bridge circuit (so-called back electromagnetic force, B-EMF). The height of this voltage peak $P_1$ may be limited by the protective diode. Further, the height of the voltage peak $P_1$ depends on the switching speed with which the relevant switch (e.g. S4 shown is Fig. 3, after a short-circuiting phase in which S3 and S4 were closed and $S_1$ and S2 were open) is opened as the switching speed determined the change in current flow $dI(t)/dt$.

The sign of this voltage peak $P_1$ depends on whether the residual energy in the resonant motor relating to the self-induced voltage at switch-off is positive or negative. In Fig. 4B the thick line I1 shows a case where the residual current flow at the predetermined first time instant $t_1$ is positive but where the voltage at the resonant motor $U_M(t_1)$ is

negative prior to the switch-off phase. In this case the sign of the voltage peak $P_1$ is positive. The thin line I2 indicates a case where the residual current flow through the resonant motor is negative at the predetermined first time instant $t_1$, but where the voltage a the resonant motor $U_M(t_1)$ as indicated by line U2 is positive prior to the switch-off phase. In this case the sign of the voltage peak $P_1$ is negative.

In light of the above, in some embodiments, the system may be pre-calibrated so that the voltage peak $P_1$ changes its sign under the condition that the effective resonance frequency $f_r$ moves from being above (or below) a first predetermined resonance frequency value $f_{r1}$ to being below (or above) this value. In this manner, it may be determined whether the resonant motor has experienced transition from a load less than a predetermined load D 1 to a load that is greater than the predetermined load D1 (e.g., a brush head of an electric toothbrush going from a non-engaged stated to an engaged state wherein the brush head is applied to the surface of a user's tooth or teeth). As the time length $T_d$ of the driving phase $S_d$ may be fixed to periodically put a certain amount of energy into the resonant motor, the time length $T_s$ of the short-circuiting phase $S_s$ can be varied such that the sign change of the voltage peak occurs when the effective resonance frequency of the resonant motor changes from being above (or below) a first predetermined resonance value to being below (or above) this value. This allows measuring when a load (i.e. pressure) applied on the resonant motor reaches a certain level. Hence, this allows measuring when a certain pressure level is applied onto the functional element.

With reference to Figs. 3 and 4B, the voltage peak $P_1$ may be used as the first motor signal that is indicative of whether the effective resonance frequency has changed from being above (or below) a predetermined first resonance frequency value $f_{r1}$ to being below (or above), which means that the load on the resonant motor has reached the predetermined first load value D1. When the sign change in the first motor signal is detected, the control unit may then control the resonant motor in such a way that the driving phase is increased by, for example, increasing the time length $T_d$ indicated in Fig. 4A so that the moving motor armature moves with the desired peak amplitude $A_p$. Instead of increasing the time length $T_d$, an increase in the peak amplitude may also be achieved by increasing the applied supply voltage (e.g. by respective use of a step-up converter for boosting the supply voltage). In some embodiments, both the voltage and the time length $T_d$ may be increased in order to increase amplitude.

As it is only relevant to measure the occurrence of the sign change of the first motor signal, the measurement unit and the evaluation unit can be realized relatively simple and thus cost efficient. For example, the measurement unit may be realized as a unit that only measures whether the first motor signal is above a certain voltage to decide whether the voltage peak is positive. The evaluation unit then only needs to evaluate whether the binary single-digit output of the measurement unit indicating the sign of the first motor signal has changed to determine if the desired load value was reached. Several possibilities exist to measure the first motor signal.

The time length $T_d$ of the driving phase and the time length $T_s$ of the short-circuiting phase (together the total driving time length $T_{ds}$) may be chosen in accordance with the peak amplitude that is to be reached. For small amplitudes, the total driving time length $T_{ds}$ may be chosen to be about 1% of the length of the half cycle time length, while for high peak amplitudes, the total driving time length $T_{ds}$ may be chosen to be up to 99% of the half cycle time length. While the driving frequency may in general have every sensible value, the driving frequency may in some embodiments be in the range of between about 1 Hz to about 10,000 Hz. In an embodiment in which the electric device is realized as an oral hygiene device such as an electric toothbrush, the driving frequency may be in the range of between about 30 Hz to about 500 Hz.

It is noted that it is not required to first have a driving phase followed by a short-circuiting phase. In particular, a resonant motor may be driven only with driving phases during the half cycles and then followed by a switching-off of the motor current in between the half-cycles (i.e., no short-circuiting phase).

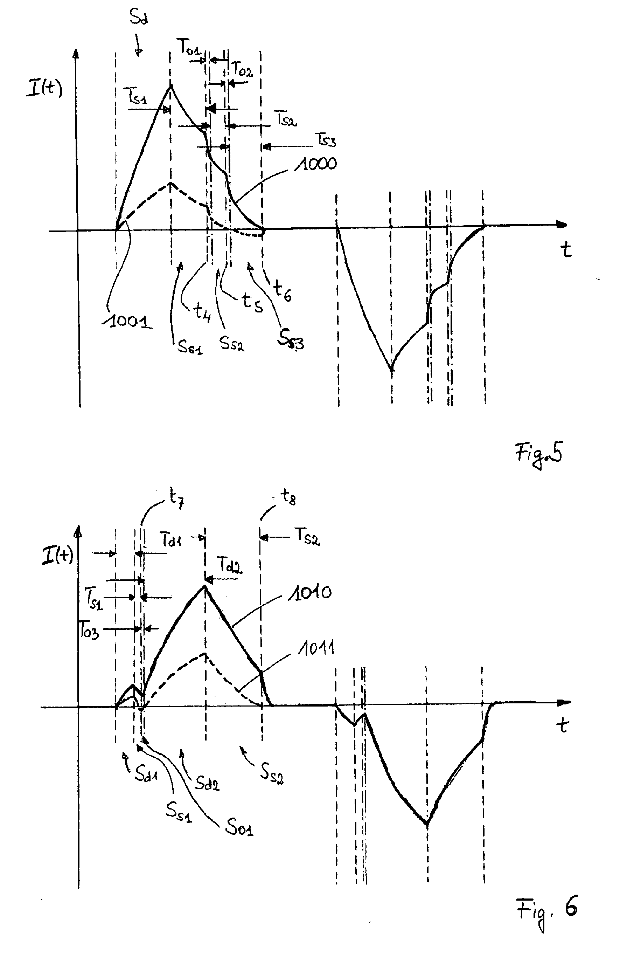

In another embodiment, a short-circuiting phase is initiated while no residual current flow through the motor coil is present. For example, the short-circuiting phase may follow after a relatively long switch-off phase that has allowed all residual current to commute over a protective diode (i.e. the short-circuiting phase starts without any residual current flow through the motor coil). Line 1001 in Fig. 5 shows a case where the residual current flow is zero after a switch-off phase initiated at predetermined time instant $t_5$, but in this example a time length $T_{O2}$ of the switch-off phase is not long enough to always guarantee that the current flow is reduced to zero as is indicated by line 1000. The time length of the switch-off phase to always guarantee zero residual current flow may be empirically determined. Current flow build-up through the motor coil is then driven by the motion-induced voltage during the short-circuiting phase and hence is dependent on the sign of the motion-induced voltage. The current flow thus changes its sign when the varying phase shift changes the sign of the motion-induced voltage around the first time instant. The relatively low current flow thus generated can then be used to generate the first motor signal by switching-off the current flow. In other words, this essentially simply probes the sign of the motion-induced voltage before the predetermined first time instant. The sign is measured by the sign of the first motor signal (i.e. the voltage peak that is given by $L \cdot dI(t)/dt$ and which follows as a result of the switching-off of the current flow). In an embodiment in which the height of the voltage peak is relevant (e.g. when the voltage peak is fed as the first motor signal to a standard input of a microcontroller, which standard input delivers a clear "high" signal when the voltage peak is above a certain value), the respective switch may be opened with an increased speed to force a higher dI(t)/dt. As is clear from the above, the variation of the switching speed simply results in a height change of the voltage peak and not in a sign change of the voltage peak.

In another embodiment as shown in Fig. 6, a relatively short first driving phase $S_{d1}$ having a time length $T_{d1}$ is followed by a short first short-circuiting phase $S_{s1}$ having a time length $T_{s1}$ and which is ended at a predetermined first time instant $t_7$ by a relatively short switch-off phase $S_{O1}$ having a time length $T_{O3}$. The resulting voltage peak developing after switch-off is then again used as first voltage signal. A second driving phase $S_{d2}$ having a longer time length $T_{d2}$ may start after the switch-off phase $S_{O1}$ and may be ended by a switch-off phase at a predetermined second time instant $t_8$ at which a developing voltage peak may be measured as the second motor signal. The short switch-off phase $S_{O1}$ may have a time length $T_{O3}$ lying in the range of between about 5 microseconds to about 100 microseconds, optionally of about 20 microseconds to 50 microseconds. The time length $T_{d1}$ of the first driving phase $S_{d1}$ and the time length $T_{s1}$ of the first short-circuiting phase $S_{s1}$ are set to time length values that allows the current flow to reduce to zero at the predetermined first time instant $t_7$ but that are also so short as to allow a second driving phase $S_{d2}$ that may have a time length $T_{d2}$ that allows for achieving a high amplitude of the moving motor armature. Those time lengths may be empirically determined.

Referring to Fig. 6, line 1010 indicates a case where the phase shift is such that the current flow I(t) is relatively high and the residual current flow at the predetermined first time instant $t_7$ is positive. The resulting voltage peak is then negative. Line 1011 indicates a case where the changed phase shift is such that the current flow I(t) is lower and the residual current flow at the predetermined first time instant $t_7$ is negative. The resulting voltage peak is then positive.

Several possibilities exist to measure a second (or more generally: a further) motor signal that is indicative of whether the effective resonance frequency has changed from being above (or below) a predetermined second (or further, i.e. third, fourth, ...) resonance frequency value $f_{r2}$ to being below (or above). In an embodiment, the second resonance frequency value $f_{r2}$ may be determined based upon a second predetermined load value D2 (as indicated in Fig. 3) on the resonant motor (and thus relates to a certain high pressure level with which the functional element is pressed against a surface). In one embodiment, a different driving phase $S_d'$ and/or a different short-circuiting phase $S_s'$ may be applied in the second half cycle such that a voltage peak $P_2$ that can be measured as second motor signal at a predetermined second time instant $t_1'$ (as shown in Figs. 4A and 4B) indicates by its sign change a change of the effective resonance frequency from being above (or below) the predetermined second resonance frequency value $f_{r2}$ to being below (or above) this value.

In an embodiment, two driving phases that are each followed by a short-circuiting phase are applied during at least a first half cycle (optionally in both half cycles) as is shown and discussed with reference to Fig. 6, thus allowing to measure whether the effective resonance frequency is below or above or between two resonance frequency values (optionally up to four different predetermined resonance frequency values can be probed).

In an embodiment, several switch-off phases alternate with several short-circuiting phases as is schematically shown in Fig. 5, where the current flow I(t) through the motor coil is shown for two successive half cycles and where three predetermined time instances $t_4$, $t_5$, and $t_6$ were chosen to be able to discern three different predetermined resonance frequency values based on the generation of three motor signals. After a driving phase $S_d$, the resonant motor is short-circuited during a first short-circuiting phase $S_{s1}$ having a time length $T_{s1}$ and then the current flow is switched off at a predetermined first time instant $t_4$ as was described above, but here the switch-off phase only lasts for a relatively short first switch-off time length $T_{O1}$. After this first switch-off phase, where the time length $T_{O1}$ of the first switch-off phase may be within a range of between about 10 microseconds and about 100 microseconds, the control unit short-circuits the resonant motor again during a second short-circuiting phase $S_{s2}$ having a time length $T_{s2}$. Then the current flow is again switched off at a predetermined second time instant $t_5$. The second switch-off phase may have a time length $T_{O2}$ that may also lie in a range of between about 10 microseconds and about 100 microseconds as shown in Fig. 5, but alternatively the second switch-off phase may continue until the start of a driving phase during the following half cycle in case only two predetermined time instances are used in the first half cycle. In the shown embodiment, a third short-circuiting phase $S_{s3}$ continues for a time length $T_{s3}$ after the second switch-off phase and is ended by a switch-off phase at a third predetermined time instant $t_6$. In another embodiment, four or even more switch-off phases alternate with respective short-circuiting phases. Line 1000 schematically indicates the current flow I(t) for an effective resonance frequency being identical to the predetermined third resonance frequency value that is tested at the predetermined third time instant $t_6$. Line 1001 (only shown for the first half cycle) schematically indicates the current flow for an effective resonance frequency being identical to the predetermined second resonance frequency value that is tested at the predetermined second time instant $t_5$. As the current flow indicated by line 1001 is eliminated after the second switch-off phase, the third short-circuiting phase $S_{s3}$ here leads to a current flow build-up that is driven by the motion-induced voltage as was discussed above, and may produce a voltage peak accordingly.

In an embodiment, at least the length of one of the driving phase and the short-circuiting phase is periodically changed from driving cycle to driving cycle. For example, in a first driving cycle a first resonance frequency value is tested by the measurement, in the second cycle a second resonance frequency value is tested, in the third cycle the first resonance frequency value is again tested etc. This could be indicated by a c1-c2-c1-c2-c1-c2-... series. Other series could be contemplated such as c1-c2-c3-c1-c2-c3-c1-c2-c3-... or c1-c2-c1-c3-c1-c2-c1-c3-... etc.

In an embodiment, the time length of the driving phase may be changed after the evaluation of the first motor signal has indicated that the effective resonance frequency has changed from being above (or below) a predetermined first resonance frequency value to being below (or above) this value. The predetermined first time instance may then be changed too. In an embodiment, a predetermined second time instant is added after the above mentioned change of the time length of the driving phase to allow measuring whether the effective resonance frequency has changed back to above (or below) the predetermined first resonance frequency value or has changed from being above (or below) a predetermined second resonance frequency value to being below (or above) this value.

All the various possibilities to test whether more than one resonance frequency value is reached can be combined with each other to the extent that this is possible.

As the peak amplitude at which the resonant motor is driven may be changed from low amplitude to high amplitude when the first motor signal changes its sign, the load value D1 indicated in Fig. 3 should relate to a pressure applied on the functional element that indicates that the electric device is being used as it is, e.g., pressed against a surface. The respective pressure level may be set to be within a range of between about 0.1 Newton (N) to about 5 N. The pressure level may in particular be chosen to be within a range of between about 0.5 N to about 1.5 N for the first motor signal and between about 1.5 N to about 3.5 N for the second motor signal. The electric device may additionally be equipped with an indicator to indicate to the user when the applied pressure is below the first pressure level (e.g. by a yellow light element), when the applied pressure is between the first and second pressure levels (e.g. with a green light element) or when the pressure level is above the second pressure level (e.g. with a red light element).

In the above described example embodiment, a driving parameter that was changed after the evaluation unit had detected a change of the effective resonance frequency from being above (or below) a predetermined first (or second, or third,...) resonance frequency value to being below (or above) this value was the time length of the driving phase. Instead of changing the time length of the driving phase, another driving parameter or several driving parameters could be changed, e.g. the driving frequency could be changed, the height of the supply voltage could be changed, the start time of the driving phase within a half cycle could be changed etc.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. A resonant motor unit comprising:

    a resonant motor;
    a control unit for driving the resonant motor at a driving frequency;
    a measurement unit for measuring at a predetermined first time instant a first motor signal that is indicative of whether the effective resonance frequency of the resonant motor is above or below a predetermined first resonance frequency value; and
    an evaluation unit for evaluating the measured first motor signal and for determining whether the effective resonance frequency has changed from being above to below or from being below to above the predetermined first resonance frequency value.

2. The resonant motor unit in accordance with claim 1, wherein the control unit is arranged to change at least one parameter of the driving of the resonant motor when a change based on the first motor signal is determined, optionally wherein the driving parameter is the energy provided to the resonant motor.

3. The resonant motor unit in accordance with claim 1 or claim 2, wherein
    the measurement unit is further arranged for measuring a second motor signal that is indicative of whether the effective resonance frequency is above or below a predetermined second resonance frequency value at a predetermined second time instant within successive driving cycles;
    the evaluation unit is further arranged for evaluating the measured second motor signals and for determining whether the effective resonance frequency has changed from being above to below or from being below to above the predetermined second resonance frequency value.

4. The resonant motor unit in accordance with claim 3, wherein the measurement unit is arranged for either:

measuring the first motor signal in a first half cycle of the driving cycle and the second motor signal in a second half cycle of the driving cycle; or

measuring the first motor signal in a first half cycle of the driving cycle and the second motor signal also in the first half cycle of the driving cycle; or

measuring the first and second motor signals within successive driving cycles.

5. The resonant motor unit in accordance with any one of claims 1 to 4, wherein the control unit is arranged for switching off a current flow through the resonant motor prior to the measuring of the first motor signal.

6. The resonant motor unit in accordance with claim 5, wherein the measuring unit is arranged to measure as the first motor signal a voltage pulse provided by the resonant motor as a response to the switching-off of the current flow.

7. The resonant motor unit in accordance with claim 6, wherein the measuring unit is arranged to only measure the sign of the voltage pulse.

8. The resonant motor unit in accordance with any one of claims 5 to 7, wherein the control unit is arranged to apply a successive short-circuiting phase at the resonant motor prior to switching off the current flow, optionally, wherein the control unit is arranged to provide a driving phase prior to the short-circuiting phase.

9. An electric device comprising a resonant motor unit in accordance with any one of claims 1 to 7, optionally wherein the electric device is an oral hygiene device such as an electric toothbrush.

10. A method of controlling a resonant motor comprising the acts of:

driving the resonant motor at a driving frequency;

repeatedly measuring at a predetermined first time instant within successive driving cycles a first motor signal that is indicative of whether the effective resonance frequency is above or below a predetermined first resonance frequency value; and

evaluating the measured first motor signals to determine whether the effective resonance frequency has changed from being above to below or from being below to above the predetermined first resonance frequency value.

11. The method in accordance with claim 9 comprising the further act of changing at least a parameter of the driving of the resonant motor when a change based on the first motor signal is determined.

12. The method in accordance with claim 10 or claim 11 comprising the further acts of:

repeatedly measuring at least at a predetermined second time instant within successive driving cycles a motor signal that is indicative of whether the effective resonance frequency is above or below a predetermined second resonance frequency value; and

evaluating the measured second motor signal to determine whether the effective resonance frequency has changed from being above to below or from being below to above the predetermined second resonance frequency value.

13. The method in accordance with one of the three previous claims, wherein the act of measuring the first motor signal comprises switching-off a current flow through the resonant motor prior to the predetermined first time instant at which the motor signal is measured.

14. The method in accordance with the previous claim, wherein the first motor signal is a voltage pulse provided by the resonant motor as a response to the switching-off of the current flow.

15. The method in accordance with the previous claim, wherein the act measuring the first motor signal further comprises short-circuiting the resonant motor prior to the act of switching-off the current flow through the resonant motor, optionally wherein the act of measuring the first motor signal further comprises applying a supply voltage at the resonant motor prior to the short-circuiting of the resonant motor.

Fig. 1

Fig. 2

Fig. 3

Fig. 4A

Fig. 4B

Fig. 5

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• DE 10246520 A1